# EUROPEAN PATENT APPLICATION

(11) **EP 3 971 912 A1**
(43) Date of publication of application: **23.03.2022**
(21) Application number: 21169263.7
(22) Date of filing: 19.04.2021
(51) Int. Cl.: H01B 3/40, H01B 3/42, C08L 63/00, H02K 3/30

(54) **ELECTRICALLY INSULATING HYBRID RESIN SYSTEM**

(71) Applicant: ABB Schweiz AG, 5400 Baden (CH)
(72) Inventor: PAULSSON, Göran, 725 91 Västerås (SE); SAHLÉN, Fredrik, Västerås 723 49 (SE); LAHTINEN, Jouni, 01800 Nurmijarvi (FI); MÅRTENSSON, Eva, 722 10 Västerås (SE)
(74) Representative: Kransell & Wennborg KB

(57) **Abstract**

The present disclosure relates to an electrically insulating resin system 3 comprising a first polymer system comprising an epoxy resin and an anhydride hardener, and a second polymer system comprising an unsaturated polyester resin and styrene, wherein the anhydride hardener is methyl nadic anhydride (MNA).

## Description

### TECHNICAL FIELD

The present disclosure relates to an electrically insulating epoxy-polyester hybrid resin system.

### BACKGROUND

Solid electrical insulation is used in some electrical machines, e.g. for high voltage (HV) rotating machines. Such solid insulation typically comprises a solid material impregnated with a hardened electrically insulating resin e.g. an epoxy-based resin.

An important property of a solid insulation is the dielectric losses associated with it. Dielectric losses are typically increased with increased temperatures, especially at temperatures above 150°C. In addition to the dielectric losses being undesirable by themselves, they may also generate further heat which then leads to even higher losses in a process called thermal runaway.

### SUMMARY

It has now been realized that the dielectric losses of solid insulation system can be reduced also at very high temperatures when using Methyl Nadic Anhydride (MNA), also called methyl-5-norbornene-2,3-dicarboxylic anhydride, as anhydride hardener for an epoxy resin in an electrically insulating epoxy-polyester hybrid resin system.

According to an aspect of the present invention, there is provided an electrically insulating resin system comprising a first polymer system comprising an epoxy resin and an anhydride hardener, and a second polymer system comprising an unsaturated polyester resin and styrene, wherein the anhydride hardener is MNA.

According to another aspect of the present invention, there is provided a use of an embodiment of the electrically insulating resin system of the present disclosure in a solid insulation system at a temperature of at least 100°C such as of at least 130°C or at least 155°C, e.g. within the range of 100-200°C, such as within the range of 130-180°C or 155-180°C.

According to another aspect of the present invention, there is provided a solid insulation system comprising a porous material impregnated with an embodiment of the electrically insulating resin system of the present disclosure.

According to another aspect of the present invention, there is provided an electrical machine comprising an embodiment of the solid insulation system of the present disclosure as electrical insulation in the machine.

When the anhydride hardener of the epoxy resin system is or comprises MNA, the hybrid resin system appears to be further stabilized, leading to reduced dielectric losses, possibly by the MNA molecule enabling chemical bonding also to the unsaturated polyester resin system, crosslinking the interpenetrating polymer networks of the epoxy- and polyester resin systems.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWING

Embodiments will be described, by way of example, with reference to the accompanying drawing, in which:

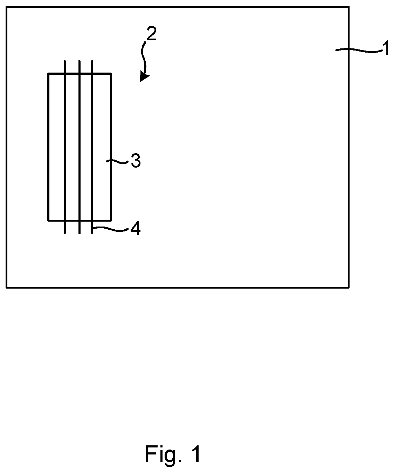

Fig 1 is a schematic sectional view of an electrical machine comprising a solid insulation system, in accordance with some embodiments of the present invention.

### DETAILED DESCRIPTION

Embodiments will now be described more fully hereinafter with reference to the accompanying drawing, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

The electrically insulating resin system is herein sometimes called a hybrid resin system, or an epoxy-polyester hybrid resin system, because it comprises two interpenetrating polymeric networks, a first (epoxy) polymer system comprising an epoxy resin and an anhydride hardener, and a second (polyester) polymer system comprising an unsaturated polyester resin and styrene as curing agent.

Figure 1 illustrates an electrical machine 1 comprising a solid insulation system 2 of a solid porous material 4 impregnated with the hybrid resin system 3 of the present disclosure.

The electrical machine 1 maybe a rotating machine. In some embodiments of the present invention, the electrical machine 1 may be an electrical motor or generator. Additionally or alternatively, in some embodiments of the present invention, the electrical machine 1 is a HV machine, e.g. an electrical machine configured for an alternating current (AC) voltage rating of at least 1 kV, e.g. of within the range of 1-15 kV.

In some embodiments of the present invention, machine 1 comprises a form wound winding for which the solid insulation system 2 is arranged as electrical insulation, e.g. a form wound stator winding. Additionally or alternatively, in some embodiments of the present invention, the solid insulation system 2 is arranged as electrical insulation of stator windings (form wound or not) in the machine 1. Additionally or alternatively, in some embodiments of the present invention, the solid insulation system 2 is arranged as electrical insulation of rotor windings (form wound or not) in the machine 1.

The porous material 4 may be any porous material suitable for a solid electrical insulation system 2. Thus, the porous material is of an electrically insulating material, typically a non-cellulose material or inorganic material, e.g. a material comprising mica. For instance, the porous material 4 may be in the form of mica paper based tape.

When forming the solid insulation system 2 as discussed herein, the constituents of the electrically insulating hybrid resin system 3 are mixed in liquid, dissolved, form, after which a solid porous material 4 is impregnated with the liquid mixture and the hybrid resin system 3 is hardened/solidified by polymerisation of the two polymer systems. This is standard practice and will not be further discussed herein.

Turning now to the hybrid resin system 3, it comprises a first polymer system comprising an epoxy resin and an anhydride hardener, and a second polymer system comprising an unsaturated polyester resin and styrene. In accordance with the present invention, the anhydride hardener is or comprises MNA. In some embodiments of the present invention, the MNA is present in an amount within the range of 5-45% by weight of the electrically insulating resin system, preferably within the range of 20-35% by weight of the electrically insulating resin system. Of course, when mentioning MNA or any other constituent such as epoxy resin, polyester resin or styrene of the hybrid resin system in solid form, the constituent is not present in a free form but bound in the polymerized hybrid resin system.

The epoxy resin may be any suitable epoxy resin but may preferably be made from Bisphenol A and/or Bisphenol F, including any combination thereof, e.g. from only Bisphenol A. In some embodiments of the present invention, the epoxy resin is present in an amount within the range of 20-60% by weight of the electrically insulating resin system, preferably within the range of 30-50% by weight of the electrically insulating resin system.

The polyester resin may be any suitable polyester resin but should be unsaturated, possibly allowing it to also bind to the MNA. In some embodiments of the present invention, the polyester resin is present in an amount within the range of 5-30% by weight of the electrically insulating resin system, preferably within the range of 5-20% by weight of the electrically insulating resin system. The polyester resin is combined with styrene to form the second polymer system. In some embodiments of the present invention, the styrene is present in an amount within the range of 5-35% by weight of the electrically insulating resin system, preferably within the range of 5-25% by weight of the electrically insulating resin system.

The hybrid resin system 3 may also comprise conventional additives, such as initiator(s), accelerator(s) and/or inhibitor(s), as minor constituent(s).

It has been found by the inventors that the use of MNA for the hybrid resin system 3, instead of another anhydride hardener such as Hexahydrophthalic Anhydride (HHPA) may significantly reduce the dielectric losses in an electrical machine 1 when the machine operates at high temperatures in the solid insulation system 2. The below table presents the dielectric losses measured at different temperatures of the solid insulation system 2 with an example embodiment of the hybrid resin system 3 of the present invention compared with a corresponding hybrid resin system which comprises HHPA as anhydride hardener. The example embodiment of the hybrid resin system 3 of the invention is identical to the reference except for the HHPA of the reference being substituted 1:1 by weight with MNA (CAS 25134-21-8). The dielectric losses are presented as the loss tangent tanδ, i.e. the tangent of the loss angle δ, in percent, measured at a rated voltage of 6.6 kV, implying that the voltage across the insulation system 2 is 6.6 kV.

| Temperature | Dielectric losses, tanδ (measured at rated voltage, U_{N}) | |
|---|---|---|
| | Reference (HHPA) | Example (MNA) |
| 20°C | 1.0% | 0.8% |
| 100°C | 3.8% | 1.7% |
| i8o°C | 21% | 6.0% |

As can be seen in the table, the losses are comparable at room temperature, but substantially reduced with the hybrid resin system 3 of the present invention at temperatures at about 100°C and above. Thus, the electrically insulating resin system 3 may advantageously be used in the solid insulation system 2 at a temperature of at least 100°C such as of at least 130°C or at least 155°C, e.g. within a range of 100-200°C, such as within the range of 130-180°C or 155-180°C. It follows that the electrical machine 1 comprising the solid insulation system 2 may be operated at high temperatures such as of at least 100°C with reduced dielectric losses. Thus, in some embodiments of the present invention, the machine 1 is, during normal operation of the machine, arranged for a temperature in the solid insulation system 2 of at least 100°C such as of at least 130°C or at least 155°C, e.g. within the range of 100-200°C, such as within the range of 130-180°C or 155-180°C. An example of such a machine 1 maybe an emergency standby generator, which is typically run at full capacity for a limited time during a temporary power outage.

A general advantage for any type of electrical machine 1 of using the solid insulation system 2, thus allowing a higher temperature in the insulation system without increased dielectric losses, is the reduced need for cooling of the machine 1.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. An electrically insulating resin system (3) comprising:
a first polymer system comprising an epoxy resin and an anhydride hardener; and
a second polymer system comprising an unsaturated polyester resin and styrene;
wherein the anhydride hardener is methyl nadic anhydride, MNA.

2. The electrically insulating resin system of claim 1, wherein the MNA is present in an amount within the range of 5-45%, preferably 20-35% by weight of the electrically insulating resin system.

3. The electrically insulating resin system of any preceding claim, wherein the epoxy resin is made from Bisphenol A and/or Bisphenol F.

4. Use of the electrically insulating resin system (3) of any preceding claim in a solid insulation system (2) at a temperature of at least 100°C such as of at least 130°C or at least 155°C, e.g. within the range of 100-200°C, such as within the range of 130-180°C or 155-180°C.

5. The use of claim 4, wherein the solid insulation system (2) has a dielectric loss tangent, tanδ, of at most 10%, e.g. at most 6%, at most 5%, or at most 4%, at rated voltage.

6. A solid insulation system (2) comprising a porous material (4) impregnated with the electrically insulating resin system (3) of any claim 1-3.

7. The solid insulation system of claim 6, wherein the porous material (4) comprises mica, e.g. in the form of mica paper.

8. An electrical machine (1) comprising the solid insulation system (2) of any claim 6-7 as electrical insulation in the machine.

9. The electrical machine of claim 8, wherein the machine (1) is a rotating machine.

10. The electrical machine of any claim 8-9, wherein the machine (1) is an electrical motor or generator.

11. The electrical machine of any claim 8-10, wherein the solid insulation system (2) is arranged as electrical insulation of stator windings in the machine (1).

12. The electrical machine of any claim 8-11, wherein the machine (1) comprises a form wound winding for which the solid insulation system (2) is arranged as electrical insulation, e.g. a form wound stator winding.

13. The electrical machine of any claim 8-12, wherein the machine (1) is a high-voltage machine.

14. The electrical machine of any claim 8-13, wherein the machine (1) is arranged for a temperature, during normal operation, in the solid insulation system (2) of at least 100°C such as of at least 130°C or at least 155°C, e.g. within the range of 100-200°C, such as within the range of 130-180°C or 155-180°C.
